# EUROPÄISCHE PATENTANMELDUNG

(11) **EP 2 894 021 A1**
(43) Veröffentlichungstag der Anmeldung: **15.07.2015**
(21) Anmeldenummer: 14199982.1
(22) Anmeldetag: 23.12.2014
(51) Int. Cl.: B29C 49/06, B29C 49/12, B29C 49/36, B29C 49/42, B29C 49/58, B29C 49/78

(54) **Vorrichtung zum Umformen von Kunststoffvorformlingen zu Kunststoffbehältnissen mit Sicherungsfunktion für Blasdüsenrückführung**

(30) Priorität: 23.12.2013 DE 102013114801
(71) Anmelder: Krones AG, 93073 Neutraubling (DE)
(72) Erfinder: Handschuh, Eduard, 93073 Neutraubling (DE); Geltinger, Florian, 93073 Neutraubling (DE)
(74) Vertreter: Hannke, Christian

(57) **Zusammenfassung**

Eine Vorrichtung (1) zum Umformen von Kunststoffvorformlingen (10) zu Kunststoffbehältnissen (20), mit einem bewegbaren Träger (2), an dem eine Vielzahl von Umformungsstationen (40) angeordnet ist, wobei diese Umformungsstationen (40) jeweils Hohlräume ausbilden, in denen die Kunststoffvorformlinge (10) durch Beaufschlagung mit einem fließfähigen Medium zu den Kunststoffbehältnissen expandierbar sind, und wobei die Umformungsstationen (40) jeweils Beaufschlagungseinrichtungen (42) aufweisen, welche die Kunststoffvorformlinge (10) mit dem fließfähigen Medium beaufschlagen sowie Reckstangen (8), welche in einen Innenraum der Kunststoffvorformlinge (10) einführbar sind, um diese Kunststoffvorformlinge (10) in ihrer Längsrichtung (L) zu dehnen, und wobei die Vorrichtung mindestens eine Antriebsanordnung (30) aufweist, um die Beaufschlagungseinrichtungen (42) relativ gegenüber dem Kunststoffvorformling (10) zu bewegen. Erfindungsgemäß weist die Antriebsanordnung (30) wenigstens eine erste Ventileinrichtung (34) auf, wobei eine Änderung eines Schaltzustands dieser Ventileinrichtung (34) die Entfernungsbewegung der Beaufschlagungseinrichtung (42) auslöst und die Umformungsstation (40) ein Sicherungsmittel (36, 54, 56, 46) aufweist, welches auch bei einem Ausfall eines Elementes der ersten Antriebsanordnung (30) eine Entfernung der Beaufschlagungseinrichtungen (42) von dem Kunststoffvorformling in Abhängigkeit von einem in dem Behältnis zu einem vorbestimmten Zeitpunkt bestehenden Druck bewirkt oder freigibt, indem eine Änderung des Schaltzustands der Ventileinrichtung (34) erzwungen und/oder umgangen wird.

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit langem bekannt. Dabei werden üblicherweise erwärmte Kunststoffvorformlinge mit einem fließfähigen Medium und insbesondere mit Blasluft beaufschlagt, um so zu Kunststoffbehältnissen umgeformt zu werden. Zu diesem Zweck werden die Kunststoffvorformlinge in Blasformen eingebracht.

Anschließend wird eine Blasdüse an den Kunststoffvorformling oder einen Bestandteil der Blasform angelegt und anschließend über diese Blasdüse der Kunststoffvorformling mit der Blasluft beaufschlagt, um so expandiert zu werden. Nach der Fertigstellung der Kunststoffbehältnisse wird diese Blasdüse wieder von dem Kunststoffvorformling entfernt. Dieser Vorgang ist dabei von großer Bedeutung. Unterbleibt nämlich eine Rückführung der Blasdüse, kann diese im weiteren Verlauf mit anderen Elementen der Umformungsvorrichtung, beispielsweise Greifklammern, kollidieren und es kann zu schweren Beschädigungen der Maschine kommen. Daher muss nach dem Fertigblasen bzw. Ausformen des Kunststoffbehältnisses innerhalb des Formträgers die Blasdüse wieder entfernt werden bzw. wieder hochfahren.

Im Stand der Technik wird dieses teilweise über eine Kopplung mit einer Reckstange erreicht. Diese Reckstange dient im Arbeitsbetrieb zum Recken des Kunststoffvorformlings in seiner Längsrichtung. Damit jedoch auch sichergestellt wird, dass die Blasdüse, bzw. im Folgenden auch als Beaufschlagungseinrichtung bezeichnet, tatsächlich wieder zurückgeführt bzw. mit nach oben genommen wurde, ist ein Blasschlitten vorgesehen, der einer Kurve folgt, wodurch (falls die Blasdüse nicht bereits durch die Reckstangenbewegung hochgeführt wurde) diese Blasdüse spätestens dann hochgeführt wird. Auf diese Weise wird eine Zwangsentlastung durchgeführt. Dieses ist aus Sicherheitsgründen erforderlich, da die Blasdüse, wenn sie nicht nach oben gehoben wird, zu schweren Beschädigungen führen könnte. Diese kurvengesteuerte Rückführung der Blasdüse ist jedoch relativ aufwendig und erfordert eine weitere stationäre Kurve.

Aus der DE 10 2009 059 829 A1 ist eine Ventileinrichtung für eine mit Hochdruck arbeitende Glaseinrichtung bekannt. Die DE 10 2010 003 623 A1 beschreibt eine Formträger-Einheit zum Formen von Behältern durch einen Streckvorgang mit einer gesteuerten Düse sowie einem Streckdorn. Aus der DE 602 02 713 T2 sind ein Blasformwerkzeug und ein Blasformverfahren zum Blasformen und Abdichten steriler Flaschen, die nach dem Abformen ohne das Erfordernis der Sterilisation vor dem Füllen geöffnet und gefüllt werden, bekannt.

Der vorliegenden Erfindung liegt daher die Aufgabe zugrunde, die Maschinensicherheit zu gewährleisten, dabei jedoch auf stationäre Führungskurven zu verzichten. Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist einen bewegbaren Träger auf, an dem eine Vielzahl von Umformungsstationen angeordnet ist, wobei diese Umformungsstationen jeweils Hohlräume ausbilden, in denen die Kunststoffvorformlinge durch Beaufschlagung mit einem fließfähigen Medium zu den Kunststoffbehältnissen expandierbar bzw. umformbar sind. Weiterhin weisen die Umformungsstationen jeweils Beaufschlagungseinrichtungen auf, welche die Kunststoffvorformlinge mit dem fließfähigen Medium beaufschlagen sowie Reckstangen, welche in einen Innenraum der Kunststoffvorformlinge einführbar sind, um diese Kunststoffvorformlinge in deren Längsrichtung zu dehnen. Dabei weist die Vorrichtung mindestens eine Antriebsanordnung auf um die Beaufschlagungseinrichtungen relativ gegenüber den Kunststoffvorformlingen zu bewegen, wobei diese Antriebsanordnung bevorzugt eine erste Antriebseinrichtung aufweist, um die Beaufschlagungseinrichtung - insbesondere nach einer Expansion der Behältnisse - von dem Kunststoffvorformling zu entfernen.

Vorteilhaft weist die Vorrichtung mindestens eine Antriebseinrichtung und bevorzugt weisen die Umformungsstationen jeweils eine Antriebsanordnung auf, um die Beaufschlagungseinrichtungen gegenüber den Kunststoffvorformlingen zu bewegen. Bei dieser Antriebseinrichtung, welche die Beaufschlagungseinrichtung von den Kunststoffbehältnissen entfernt, handelt es sich vorzugsweise um eine Antriebseinrichtung, welche noch eine weitere Bewegungsaufgabe wahrnimmt, bzw. welche noch ein weiteres Element der Umformungsstation bewegt. Insbesondere handelt es sich bei der Antriebseinrichtung, welche die Beaufschlagungseinrichtung von den Behältnissen entfernt, um eine Antriebseinrichtung, welche eine Reckstange aus den Behältnissen herausbewegt.

Vorteilhaft wird die Beaufschlagungseinrichtung selbst bewegt, insbesondere in einer Längsrichtung der Behältnisse und die Behältnisse werden in diesem Verfahrensstadium nicht in ihrer Längsrichtung bewegt. Es wäre jedoch auch denkbar, dass die Kunststoffvorformlinge in ihrer Längsrichtung bewegt werden, um so von der Beaufschlagungseinrichtung entfernt zu werden.

Erfindungsgemäß weist die Antriebsanordnung wenigstens eine erste Ventileinrichtung auf, wobei eine Änderung eines Schaltzustands dieser Ventileinrichtung eine Entfernungsbewegung der Beaufschlagungseinrichtung freigibt (bzw. auslöst) und die Vorrichtung bzw. wenigstens eine Umformungsstation ein Sicherungsmittel aufweist, welches auch bei einem Ausfall eines Elements der Antriebsanordnung eine Entfernung der Beaufschlagungseinrichtung von dem Kunststoffvorformling -insbesondere in Abhängigkeit von einem in dem Behältnis zu einem vorbestimmten Zeitpunkt bestehenden Druck - bewirkt.

Bevorzugt bewirkt das Sicherungsmittel die Entfernung der Beaufschlagungseinrichtung , indem eine Änderung des Schaltzustandes der Ventileinrichtung erzwungen und/oder umgangen wird. Zusätzlich oder alternativ wäre es auch möglich, dass die Vorrichtung ein Sicherungsmittel aufweist, welches auch bei einem Ausfall eines Elements der Antriebsanordnung eine Entfernung der Beaufschlagungseinrichtung von dem Kunststoffvorformling in Abhängigkeit von einer Position der Umformungsstation entlang des Transportpfads der Kunststoffvorformlinge bewirkt. Bei dieser Ausgestaltung wird die Position abgefragt, an der sich eine Umformungsstation befindet, insbesondere eine Position in der Umfangsrichtung eines Blasrads. Wenn es sich hierbei um eine Position handelt, bei der ein Zurückziehen der Beaufschlagungseinrichtung eingeleitet werden müsste, kann das Sicherungsmittel entsprechend aktiviert werden.

Unter einer Änderung des Schaltzustandes der Ventileinrichtung wird allgemein verstanden, dass dieses Ventil durch eine irgendwie geartete physikalische Änderung eines Zustands dieses Ventils eine Bewegung der Beaufschlagungseinrichtung initiiert, durchführt oder wenigstens bewirkt. So kann beispielsweise die Beaufschlagungseinrichtung mittels eines Gasdrucks auf den Kunststoffvorformling zugestellt werden und bei einer Entlastung kann dieser Gasdruck bzw. das nicht mehr Vorhandensein dieses Gasdrucks bewirken, dass eine Rückstellung bzw. Entfernung der Beaufschlagungseinrichtung von dem Kunststoffvorformling erfolgt. Dieses bedeutet, dass bei einem Normalbetrieb der Vorrichtung das besagte Ventil bzw. die Ventileinrichtung für die Rückstellung der Beaufschlagungseinrichtung verantwortlich bzw. mit verantwortlich ist.

Es werden daher Sicherungsmittel vorgeschlagen, die insbesondere in Reaktion auf einen Innendruck in dem Behältnis reagieren. Die im Stand der Technik zum Teil verwendeten Notkurven wirken hingegen in Abhängigkeit der einzelnen Blasstation auf ihrem Transportpfad, insbesondere einer Stellung der Blasstation in der Rotationsrichtung des Blasrades.

Bevorzugt ist die Beaufschlagungseinrichtung, wie etwa eine Blasdüse mit der Reckstange gekoppelt, etwa über einen Konus an der Reckstange. Beim Recken, insbesondere beim elektrischen Recken fährt die Reckstange samt Blasdüse nach unten, d.h. auf den Kunststoffvorformling zu. Auf einen Blaskolben der Beaufschlagungseinrichtung wirkt dabei ein statisch anstehender Druck. Der Druck auf den Blaskolben erhöht sich dabei proportional mit dem Druck, der in dem Behältnis herrscht. Das heißt, die Kraft, die vom Blaskolben aus gesehen nach unten wirkt und die Kraft, die von dem Behältnis aus gesehen nach oben wirkt, sind in dieser Situation im Wesentlichen gleich hoch.

Bevorzugt wird jedoch die Beaufschlagungseinrichtung mit einer zusätzlichen Kraft an die Behältnisse angedrückt. Damit die Beaufschlagungseinrichtung hier aber gut abdichten kann, wirkt bevorzugt ein zusätzlicher Druck von oben auf die Blasdüse - das ist die Vorspannkraft. Dabei kann ein pneumatisch wirkendes Vorspannmittel zum Erreichen dieser Vorspannkraft vorgesehen sein. Es wäre aber ebenfalls denkbar, dass diese zusätzliche Vorspannkraft magnetisch erzeugt oder durch eine Feder gewährleistet wird.

In der Situation, in der die Blasdüse bzw. die Beaufschlagungseinrichtung abdichtet, etwa an einem Tragring des Behältnisses abdichtet und das Behältnis fertig geblasen ist, herrscht in der Flasche und auch im Ringraum überhalb des Blaskolbens ein sehr hoher Druck. Dieser kann hier nicht entweichen. Dadurch wirkt eine sehr hohe Kraft von insbesondere mehreren kN nach unten auf die Blasdüse bzw. die Beaufschlagungseinrichtung.

Im Normalfall würde jetzt das EXH-Ventil (Auslassventil) öffnen. Dadurch senkt sich der Druck im Ringraum und der Flasche und der Reckantrieb mit einer maximalen Kraft von 2kN kann die Reckstange hochfahren. Da die Blasdüse über den Konus der Reckstange gekoppelt ist, fährt diese auch mit nach oben. Es kann kein Zusammenstoß mit anderen Bauteilen auftreten.

Für den Fall, dass das EXH-Ventil nicht öffnen kann, tritt das Problem auf, dass die Kraft, die durch den anstehenden Druck im Ringraum und der Flasche auftritt, höher ist, als die maximale Kraft des Reckstangenantriebs. Die Reckstange kann also nicht hochfahren - wodurch auch die Blasdüse in ihrer unteren Position bleibt, was zu Zusammenstößen führen kann.

Damit dies nicht passiert, gleichzeitig aber keine zusätzliche Kurve benötigt wird, die wie bisher ab einem bestimmten Prozesswinkel dafür sorgt, dass eine Zwangsentlastung eingeleitet wird, werden im Rahmen der Erfindung mehrere Sicherungsmittel genannt, die eine Entlüftung des Ringraums eben doch noch ermöglichen. Gemeinsam ist jedoch allen diesen Sicherungsmitteln, dass sie eine Rückführung der Beaufschlagungseinrichtung auch ohne eine mechanische Führungskurve bewirken.

Vorzugsweise ist die Ventileinrichtung derart geschaltet, dass sie in einem Schaltzustand eine Druckbeaufschlagung bewirkt, wobei diese Druckbeaufschlagung wiederum eine Zustellung der Beaufschlagungseinrichtung auf den Kunststoffvorformling hin bewirkt. Fehlt diese Druckbeaufschlagung, wird bevorzugt die Beaufschlagungseinrichtung von dem Kunststoffvorformling abgehoben bzw. rückgeführt. Auf diese Weise kann erreicht werden, dass in einem drucklosen Zustand die Beaufschlagungseinrichtung nicht auf den Kunststoffvorformling zugestellt ist. Vorteilhaft handelt es sich bei der Ventileinrichtung um ein Pilotventil, welches beispielsweise eine Druckbeaufschlagung für eine pneumatische Einrichtung zum Rückführen der Beaufschlagungseinrichtung oder eine Entlüftung einer derartigen Einrichtung steuert.

Vorzugsweise handelt es sich bei der Antriebseinrichtung ebenfalls um eine pneumatische Antriebseinrichtung und insbesondere um eine Antriebseinrichtung, bei der ein Kolbenelement unter Wirkung eines gasförmigen Mediums bewegt wird.

Die Erfindung schlägt nun vor, dass bei einem etwaigen Ausfall des besagten Ventils keine Rückführung der Beaufschlagungseinrichtung über eine Führungskurve erfolgt, sondern der Schaltzustand der Ventileinrichtung, bzw. die Änderung derselben, durch andere Mittel erzwungen wird oder diese Änderung umgangen wird, wie unten erläutert, beispielsweise durch Vorsehen eines zweiten redundanten Ventils. Dabei wird jedoch insbesondere diese Änderung (auch) in Abhängigkeit von einem Innendruck in dem Behältnis bewirkt oder umgangen.

Vorteilhaft handelt es sich bei dem beweglichen Träger um einen drehbaren Träger und insbesondere um ein Blasrad, an dem eine Vielzahl von Umformungseinrichtungen angeordnet ist. Bevorzugt ist jeder Umformungsstation je ein derartiges Sicherungsmittel zugeordnet. Es wäre jedoch auch denkbar, dass eine Vielzahl von Sicherungsmitteln vorgesehen ist. Es wäre weiterhin denkbar, dass ein Sicherungsmittel mehreren oder allen Umformungsstationen zugeordnet ist

Vorteilhaft weist die Vorrichtung auch eine Vielzahl von Ventilen auf, welche die Zuführung des fließfähigen Mediums zu dem Kunststoffvorformling steuern. So kann die Umformung der Kunststoffvorformlinge durch Beaufschlagung mit mehreren unterschiedlichen Druckniveaus erfolgen, beispielsweise durch Beaufschlagung mit einem Vorblasdruck, und/oder einem Zwischenblasdruck und einem Fertigblasdruck.

Bei dem fließfähigen Medium zum Beaufschlagen der Kunststoffvorformlinge zu Kunststoffbehältnissen handelt es sich insbesondere um Luft. Dabei kann jedoch auch Sterilluft Anwendung finden.

Bei der Ventileinrichtung handelt es sich insbesondere um ein Pneumatikventil, welches Luftströme steuert. Eine Änderung des Schaltzustandes dieses Ventils kann dabei, beispielsweise durch ein ebenfalls pneumatisches Vorsteuerventil erfolgen, es wären jedoch auch andere Vorgehensweisen denkbar, wie beispielsweise eine magnetische Schaltung oder eine elektrische Schaltung des Ventils. Auch könnte das Ventil durch mechanische Maßnahmen geschaltet werden.

Die Antriebseinrichtung zur Rückführung der Beaufschlagungseinrichtung kann dabei insbesondere eine pneumatische Antriebseinrichtung sein. So kann es sich bei der Ventileinrichtung beispielsweise um ein Pilotventil handeln, welches eine Entlüftung oder Belüftung eines Ventilraums der pneumatischen Antriebseinrichtung bewirken kann, wobei durch diese Belüftung oder Entlüftung die Rückführung der Beaufschlagungseinrichtung bewirkt wird.

Bevorzugt wird daher, falls die Ventileinrichtung ausfällt, im Rahmen eines Notbetriebs eine Schaltänderung bewirkt. Auf diese Weise wird einerseits eine sichere Rückführung der Beaufschlagungseinrichtung bzw. eine Zwangsentlastung gewährleistet, andererseits jedoch auf den oben erwähnten Blasschlitten bzw. eine Blasdüsenkurve verzichtet.
Zusätzlich oder alternativ wäre es auch möglich, dass, falls ein Ausfall der Ventileinrichtung erkannt wird, andere Maßnahmen ergriffen werden, beispielsweise ein Notstopp eingeleitet wird oder weitere Elemente, welche mit der Beaufschlagungseinrichtung kollidieren könnten, aus einem Kollisionsbereich entfernt bzw. weggefahren werden. Die Anmelderin behält sich vor, auch auf derartige Ausgestaltungen Schutz zu beanspruchen. In diesem Falle weist die Vorrichtung eine Erfassungseinrichtung auf, welche einen (insbesondere künftigen) Ausfall einer Ventileinrichtung erkennt und bevorzugt ein Signal ausgibt, welches eine bestimmte Reaktion der Vorrichtung hervorruft, wie etwa den oben beschriebenen Notstopp.

Vorzugsweise handelt es sich bei der Beaufschlagungseinrichtung um eine Blasdüse. Vorzugsweise weist die Antriebsanordnung auch eine Antriebseinrichtung auf, welche die Beaufschlagungseinrichtung auf die Kunststoffvorformlinge hin zustellt, beispielsweise auf die Kunststoffvorformlinge bzw. die Blasformen, in denen die Kunststoffvorformlinge angeordnet sind, absenkt. Dabei kann auch diese Zustellbewegung pneumatisch erfolgen.

Dabei ist es möglich, dass die gleiche Antriebseinrichtung sowohl die Beaufschlagungseinrichtung auf die Kunststoffvorformlinge zustellt als auch die Beaufschlagungseinrichtung von den Kunststoffvorformlingen entfernt.

Es wäre jedoch auch denkbar, dass die Bewegung der Beaufschlagungseinrichtung wenigstens zeitweise an eine Bewegung der Reckstange gekoppelt ist, beispielsweise wenigstens zeitweise die Beaufschlagungseinrichtung mit der Reckstangenbewegung gekoppelt ist bzw. mitgeführt wird. So wäre es auch möglich, dass diese Kopplung so ausgelegt ist, dass sie lediglich bei einem Ausfall der Ventileinrichtung wirkt und auf diese Weise eine Veränderung des Schaltzustands des Ventils umgangen wird.

Dabei wäre es neben der hier beschriebenen pneumatischen Bewegung auch denkbar, dass andere Antriebseinrichtungen vorgesehen sind, welche die Zustellung der Beaufschlagungseinrichtung an den Kunststoffvorformling bewirken, wie etwa elektromotorische Antriebe oder Linearmotoren.

Bei einer weiteren vorteilhaften Ausführungsform wird die Bewegung, welche die Beaufschlagungseinrichtung von dem Kunststoffvorformling entfernt, ohne Verwendung stationärer Führungselemente durchgeführt bzw. erfolgt ohne Verwendung stationärer Führungselemente. Dabei ist insbesondere keine stationäre Führungskurve vorgesehen, welche eine Rückstellbewegung der Beaufschlagungseinrichtung ermöglicht. Vorteilhaft sind zur Erreichung einer Entfernungsbewegung der Beaufschlagungseinrichtung von dem Kunststoffvorformling keine bezüglich einander bewegliche Führungselemente wie beispielsweise eine stationäre Führungskurve und dieser gegenüber bewegliche Führungsrollen vorgesehen und bevorzugt keine mechanischen Elemente vorgesehen.

So wird die Beaufschlagungseinrichtung bzw. die Blasdüse oder der Blaskolben oder auch angrenzende Bauteile nicht über ortsfeste Kurven bewegt, insbesondere auch nicht bereichsweise, sondern beispielsweise über das besagte Ventil und/oder durch eine, zumindest teilweise, Kopplung mit etwa einem Reckstangenantrieb, bzw. dessen Übertragungselementen, wie beispielsweise einem Reckschlitten, der Reckstange selbst oder dergleichen.

Bevorzugt wird auch in keinem Betriebszustand der Vorrichtung, auch nicht bei Auftreten einer Störung, insbesondere der oben genannten Ventileinrichtung, eine mechanische Übertragung zwischen einem stationär angeordneten und insbesondere fest installierten Element, wie beispielsweise einer Notkurve und der Beaufschlagungseinrichtung bzw. der Blasdüse oder dem Blaskolben, durchgeführt. Damit erfolgt bevorzugt die Rückstellung der Beaufschlagungseinrichtung ausschließlich führungskurvenlos.

Bevorzugt sind an der Blasdüse bzw. dem Blaskolben keine mechanischen Elemente, wie beispielsweise Führungsrollen, Blasschlitten oder Fangeinrichtungen vorgesehen, die eine Interaktion mit einem insbesondere stationären und insbesondere außerhalb des drehenden Trägers angeordneten Bauteils ermöglichen.

Mit anderen Worten wird die Bewegung, welche die Beaufschlagungseinrichtung von Kunststoffvorformlingen entfernt, ohne Verwendung stationärer Führungselemente durchgeführt bzw. initiiert.

Bei einer bevorzugten Ausführungsform ist zusätzlich zu der ersten Ventileinrichtung eine zweite Ventileinrichtung vorgesehen, welche ebenfalls geeignet ist, durch eine Änderung eines Schaltzustandes dieser zweiten Ventileinrichtung die Entfernungsbewegung der Beaufschlagungseinrichtung auszulösen und/oder freizugeben. Dabei ist es möglich, dass diese beiden Ventileinrichtungen redundant vorhanden sind, wobei insbesondere die Änderung des Schaltzustandes nur eines Ventils genügt, um die Rückführbewegung der Beaufschlagungseinrichtung einzuleiten. Es wäre jedoch auch möglich, dass eine Steuerung bewirkt, dass das zweite Ventil nur dann schaltet, wenn ein Defekt oder Fehler der ersten Ventileinrichtung festgestellt wird. Vorteilhaft werden diese erste und die zweite Ventileinrichtung unabhängig voneinander gesteuert und/oder weisen unabhängige Steuereinrichtungen auf.

Bei einer weiteren vorteilhaften Ausführungsform weist die erste Ventileinrichtung zwei wenigstens teilweise voneinander unabhängige Steuerungseinrichtungen zum Steuern dieser Ventileinrichtung auf. In diesem Falle wird die Sicherung des Systems bzw. die Sicherungseinrichtung dadurch realisiert, dass die eine Ventileinrichtung zwei oder wenigstens zwei parallel redundant angeordnete Steuerungseinrichtungen und insbesondere zwei parallel und redundant angeordnete elektrische oder elektro-pneumatische Vorsteuerungseinrichtungen aufweist.

Bei einer weiteren vorteilhaften Ausführungsform weist die Vorrichtung eine Erfassungseinrichtung auf, welche eine Fehlfunktion der ersten Ventileinrichtung erfasst. So kann beispielsweise ein insbesondere künftiges Nichtschalten dieses Ventils erfasst werden oder auch die Tatsache, dass das Ventil nicht in dem dafür vorgesehenen Zeitpunkt geschaltet hat. Weiterhin weist hier die Vorrichtung auch eine Ausgabeeinrichtung auf, welche bevorzugt in Reaktion auf einen erfassten Fehler ein Signal ausgibt und insbesondere ein Signal, welches eine Bewegung der Beaufschlagungseinrichtung weg von dem Kunststoffvorformling bewirkt. Es können jedoch auch andere Signale wie oben erwähnt ausgegeben werden, etwa Signale, die einen Notstopp der Vorrichtung auslösen.

Bei einer weiteren vorteilhaften Ausführungsform weist die Vorrichtung eine Entlüftungseinrichtung auf, welche bei einem Ausfall der Ventileinrichtung eine Entlüftung wenigstens eines zu einer Veränderung des Schaltzustandes dieser Ventileinrichtung dienenden Fluidraums bewirkt. Wenn ein fehlerhaftes Ventil nicht schaltet, ist es denkbar, dass insbesondere ein Raum dieses Ventils nicht entlüftet wird, sodass das Ventil nicht in eine Grundstellung zurückkehren kann. In diesem Falle wird vorgeschlagen, dass eine Entlüftung eines Ventilraums oder auch eine Entlüftung eines Ringraums, der dieses Ventil versorgt, durchgeführt wird.

Diese Entlüftung bewirkt wiederum, dass das Ventil zwangsweise schaltet und so die Beaufschlagungseinrichtung von dem Kunststoffvorformling entfernt wird. Wie erwähnt, wäre es auch möglich, einen Ringraum zu entlüften, der dieses Ventil versorgt. Dabei kann gegebenenfalls auch in Kauf genommen werden, dass sämtliche andere Ventile der anderen Umformungsstationen ebenfalls geschaltet werden. Dieses würde gegebenenfalls dazu führen, dass die gerade gefertigten Behältnisse nicht zu Ende gefertigt werden, dies wäre jedoch möglicherweise hinzunehmen im Vergleich zu einer Kollision oder einer schweren Beschädigung der Maschine.

Weiterhin wäre es auch möglich, dass diese Entlüftung etwa eines Kolbenraums der Ventileinrichtung durch eine Reckbewegung einer Reckstange erfolgt.

Bei einer weiteren bevorzugten Ausführungsform weist die Vorrichtung eine Druckerfassungseinrichtung auf, welche einen Innendruck innerhalb des zu expandierenden Behältnisses erfasst. Diese Druckerfassungseinrichtung kann dabei steuerungstechnisch mit dem Sicherungsmittel verbunden sein, so dass das Sicherungsmittel auch in Abhängigkeit von einer in das Behältnis und/oder einer zu dem Behältnis führenden Zuführleitung für das gasförmige Medium betätigt werden kann. So ist es möglich, dass das Sicherungsmittel erst ab einem bestimmten Innendruck in dem Behältnis aktiviert wird.

Die vorliegende Erfindung ist weiterhin auf ein Verfahren zum Umformen von Kunststoffvorformlingen zu Kunststoffbehältnissen mit den folgenden Schritten gerichtet:
- Übergabe eines Kunststoffvorformlings an eine Umformungsstation
- Heranführen einer Beaufschlagungseinrichtung an den Kunststoffvorformling
- Beaufschlagen eines Innenraums des Kunststoffvorformlings mit einem fließfähigen Medium zu dessen Expansion
- Wegführen der Beaufschlagungseinrichtung von dem Kunststoffvorformling bzw. dem hieraus bereits geblasenen Behältnis nach erfolgter Expansion des Kunststoffvorformlings
   - (optional) Entnehmen des fertig geblasenen Behältnisses aus der Umformungsstation.
   Dabei wird zum Wegführen der Beaufschlagungseinrichtung von dem Kunststoffvorformling eine Antriebseinrichtung verwendet und diese Antriebseinrichtung weist wenigstens eine erste Ventileinrichtung auf, wobei durch eine Änderung eines Schaltzustands dieser Ventileinrichtung die Entfernungsbewegung der Beaufschlagungseinrichtung ausgelöst bzw. freigegeben wird.

Erfindungsgemäß ist wenigstens ein Sicherungsmittel und sind bevorzugt mehrere Sicherungsmittel vorgesehen, welche bei einem Ausfall der Ventileinrichtung eine Entfernung der Beaufschlagungseinrichtung von dem Kunststoffvorformling bewirken und/oder freigeben.

Vorteilhaft bewirken oder umgehen die Sicherungsmittel bei einem Ausfall der Ventileinrichtung eine Änderung des Schaltzustands der Ventileinrichtung. Vorteilhaft bewirken oder umgehen die Sicherungsmittel eine Entfernung der Beaufschlagungseinrichtung von dem Kunststoffvorformling in Abhängigkeit von einem in dem Behältnis zu einem vorbestimmten Zeitpunkt bestehenden Druck. Insbesondere handelt es sich dabei um einen zum Ende des Blasvorgangs in dem Behältnis bestehenden Druck, beispielsweise einen Fertigblasdruck. Bei dem vorbestimmten Zeitpunkt handelt es sich bevorzugt um einen Zeitpunkt, zu dem das Kunststoffbehältnis bereits vollständig expandiert ist und/oder einen Zeitpunkt, zu dem die Expansion des Behältnisses abgeschlossen ist.

So ist es beispielsweise möglich, dass festgestellt wird, dass zu einem bestimmten Zeitpunkt des Blasformvorgangs, insbesondere zu einem Zeitpunkt, zu dem bereits eine Entlastung des Behältnisses vorgenommen werden müsste, noch ein zu hoher Druck in dem Behältnis anliegt. In diesem Falle können die Sicherungsmittel eine Entlastung des Behältnisses bewirken.

Unter einer Umgehung der Änderung des Schaltzustandes wird dabei verstanden, dass die Rückführung der Beaufschlagungseinrichtung (z.B. eines Blaskolbens und/oder einer Blasdüse) auch unabhängig von diesem Schaltzustand bewirkt wird.

Vorzugsweise unterscheiden sich zwei verschiedene Schaltzustände der Ventileinrichtung insbesondere hinsichtlich der Strömungen der an dieser Ventileinrichtung anliegenden Fluid- und insbesondere Gasvolumina und/oder hinsichtlich der durch diese Ventileinrichtung strömenden Fluid- und insbesondere Gasvolumina. Weiterhin unterscheiden sich die Schaltzustände bevorzugt hinsichtlich einer Stellung eines Kolbenelements dieser Ventileinrichtung (insbesondere einer Stellung dieses Kolbenelements gegenüber einem Gehäuse der Ventileinrichtung).

Bei einem vorteilhaften Verfahren wird die Rückführung der Beaufschlagungseinrichtung durch eine elektrische Antriebseinrichtung bewirkt. Vorteilhaft wird die Rückführung durch eine Kopplung der Bewegung der Beaufschlagungseinrichtung an eine Bewegung der Reckstange durchgeführt. Ein Zustellen der Beaufschlagungseinrichtung erfolgt bevorzugt pneumatisch und bevorzugt über einen statischen Druck. Wie oben erwähnt muss dabei keine Antriebseinrichtung vorgesehen sein, welche ausschließlich das Rückführen der Beaufschlagungseinrichtung bewerkstelligt, bevorzugt handelt es sich um eine Antriebseinrichtung, welche (auch) ein anderes Bauteil, wie insbesondere die Reckstange bewegt.

Bei einem weiteren vorteilhaften Verfahren wird zum Zweck des Umformvorgangs eine Reckstange in die Kunststoffvorformlinge eingeführt, um diese zu dehnen und diese Reckstange zu einem späteren Zeitraum insbesondere nach einer erfolgten Ausformung des Behältnisses wieder aus dem Behältnis heraus bewegt.

Bei einem weiteren vorteilhaften Verfahren erfolgt die Entfernung der Beaufschlagungseinrichtung wenigstens bei einem Ausfall der Ventileinrichtung durch eine mechanische Kopplung einer Bewegung der Beaufschlagungseinrichtung an eine Bewegung der Reckstange.

Vorteilhaft weisen die Sicherungsmittel eine zweite Ventileinrichtung auf, welche zumindest auch bei einem Ausfall der ersten Ventileinrichtung eine Entfernung der Beaufschlagungseinrichtung von dem Kunststoffvorformling bewirkt.

Weitere Vorteile und Ausführungsformen ergeben sich aus den beigefügten Zeichnungen. Darin zeigen:
- Fig. 1: Eine schematische Darstellung einer Vorrichtung zum Umformen von Kunststoffvorformlingen zu Kunststoffbehältnissen;
- Fig. 2: eine Darstellung einer Vorrichtung nach dem Stand der Technik;
- Fig. 3: eine teilweise Darstellung einer erfindungsgemäßen Umformungsstation;
- Fig. 4: eine schematische Darstellung einer ersten erfindungsgemäßen Ausgestaltung;
- Fig. 5: eine Darstellung einer zweiten erfindungsgemäßen Ausgestaltung;
- Fig. 6: eine Darstellung der dritten erfindungsgemäßen Ausgestaltung;
- Fig. 7: eine Darstellung einer vierten erfindungsgemäßen Ausgestaltung;
- Fig. 8: eine Darstellung einer an einen Kunststoffvorformling angelegten Beaufschlagungseinrichtung; und
- Fig. 9: eine Darstellung zur Veranschaulichung der Druckverhältnisse.

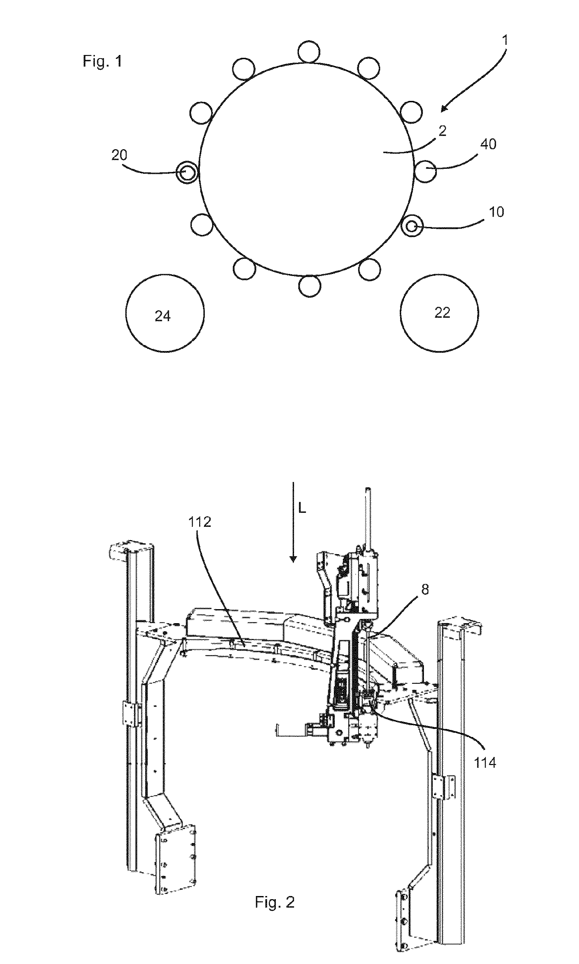

Fig. 1 zeigt eine schematische Darstellung einer erfindungsgemäßen Vorrichtung zum Umformen von Kunststoffvorformlingen 10 zu Kunststoffbehältnissen 20. Dabei werden die Kunststoffvorformlinge über eine Zuführeinrichtung, wie beispielsweise ein Sternrad 22, der eigentlichen Umformungseinrichtung 1 zugeführt. Stromaufwärts der Umformungseinrichtung 1 ist üblicherweise eine Heizeinrichtung (nicht dargestellt) angeordnet, die die Kunststoffvorformlinge vor dem Umformvorgang erwärmt. Diese Umformungseinrichtung 1 weist dabei einen um eine insbesondere vertikal bzw. auf den Erdmittelpunkt zu ausgerichtete Achse drehbaren Träger 2 auf, an dem eine Vielzahl von Umformungsstationen 40 angeordnet ist. Diese Umformungsstationen weisen dabei jeweils auseinanderklappbare Seitenteile auf, welche einen Kunststoffvorformling aufnehmen können.

Nach ihrer Expansion zu den Kunststoffbehältnissen 20 werden diese über eine Abführeinrichtung 24 bei der es sich ebenfalls um ein Sternrad handeln kann, wieder abgeführt.

Fig. 2 zeigt eine schematische Darstellung einer Vorrichtung nach dem Stand der Technik. Man erkennt, dass hier eine Blasdüsenkurve 112 vorgesehen ist, welche im Notfall eine Rückbewegung bzw. ein Abziehen der Blasdüsenanordnung ermöglicht. Das Bezugszeichen 114 kennzeichnet einen Blasschlitten, der gegenüber diesem Kurventräger bzw. der Blasdüsenkurve abrollen kann. Wie oben erwähnt, hat sich für die Erfinderin die Aufgabe gestellt, auf diese Blasdüsenkurve zu verzichten, gleichzeitig jedoch unter allen Umständen die Rückführung der Blasdüse zu gewährleisten.

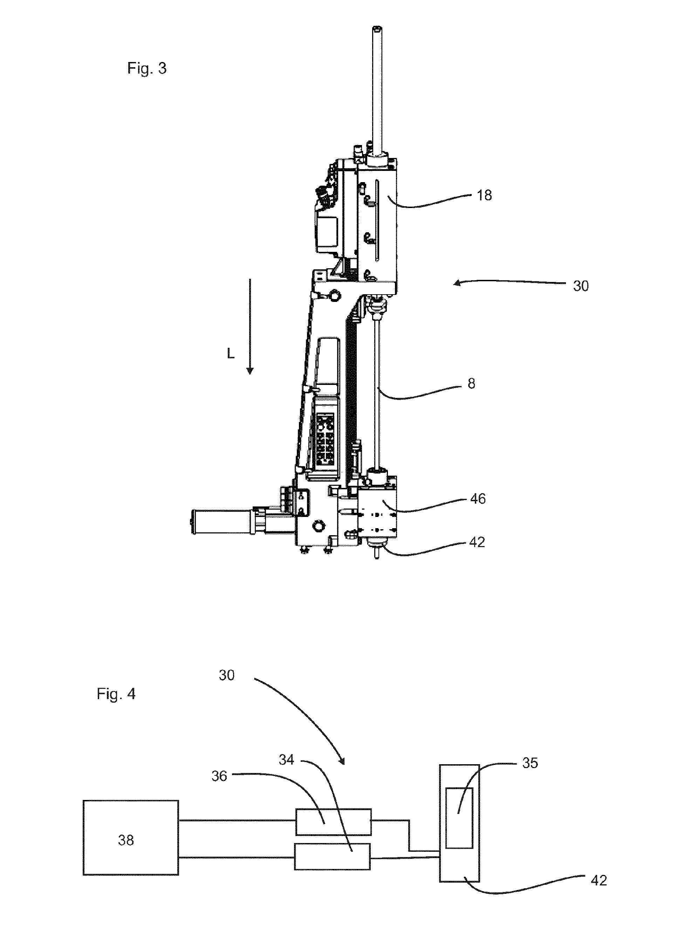

Fig. 3 zeigt eine teilweise Darstellung einer erfindungsgemäßen Umformungsstation. Man erkennt hier wiederum die Reckstange 8 sowie einen Reckstangenantrieb 18, der dazu dient, die Reckstange in der Längsrichtung L zu bewegen. Bei dem Reckstangenantrieb handelt es sich bevorzugt um einen elektromotorischen oder einen pneumatischen Antrieb, es könnte jedoch auch ein Antrieb mittels Führungskurven zum Einsatz kommen. Das Bezugszeichen 30 kennzeichnet grob schematisch eine Antriebsanordnung zum Bewegen der Beaufschlagungseinrichtung. Dabei wird, wie oben ausgeführt die Rückstellbewegung der Beaufschlagungseinrichtung an die Bewegung der Reckstange gekoppelt, sodass bei einem Zurückziehen der Reckstange auch die Beaufschlagungseinrichtung zurückgezogen wird. Das Zustellen der Beaufschlagungseinrichtung auf die Behältnisse erfolgt bevorzugt pneumatisch. Auch wird bevorzugt die Beaufschlagungseinrichtung durch pneumatische Mittel während es Umformungsvorgangs an die Behältnisse angedrückt.

Das Bezugszeichen 42 kennzeichnet eine Beaufschlagungseinrichtung bzw. eine Blasdüse, die zur Beaufschlagung der Kunststoffvorformlinge mit Luft auf diese Kunststoffvorformlinge aufgesetzt wird. Zu diesem Zweck kann auch diese Blasdüse 42 in der Längsrichtung L nach unten bzw. oben bewegt werden. Das Bezugszeichen 46 kennzeichnet einen Ventilblock, der eine Vielzahl von Ventilen aufweist, welche die Zuführung der Blasluft in die Kunststoffvorformlinge steuern. Dabei ist auch ein Auslass (Exhaust)-Ventil vorgesehen, welches, insbesondere nach Beendigung des Blasvorgangs, die Blasluft aus den nunmehr ausgeformten Kunststoffvorformlingen bzw. Kunststoffbehältnissen entlässt. Über dieses Auslassventil kann auch eine Rückführbewegung der Blasdüse 42 gesteuert bzw. erreicht werden. Genauer gesagt dient hier das Auslassventil zum entlasten des Ringraums. Dadurch wird die Kraft auf die Beaufschlagungseinrichtung reduziert. Die Beaufschlagungseinrichtung kann daher von dem Reckantrieb hochgehoben werden. Daher lässt das Auslassventil ein Anheben der Beaufschlagungseinrichtung zu. Die Rückführbewegung der Blasdüse selbst erfolgt durch die Kupplung mit der Reckstange.

So wäre es möglich, dass mit dem Entlasten des Kunststoffvorformlings auch durch eine pneumatische Antriebseinrichtung die Blasdüse 42 zurückgeführt wird.

Bei einer Ausführungsform wäre es denkbar, dass die Bewegung der Blasdüse abschnittsweise an die Bewegung der Reckstange 8 gekoppelt ist und so in jedem Falle mit der Reckstangenbewegung wieder zurückgeführt wird.

Fig. 4 zeigt eine schematische Darstellung einer ersten Ausführungsform der Erfindung. Man erkennt hier wieder die Beaufschlagungseinrichtung 42 und eine nur schematisch dargestellte Antriebsanordnung 30 (beispielsweise in Form eines Auslassventils), welche pneumatisch ausgestaltet ist, und welche eine Rückstellung der Beaufschlagungseinrichtung 42 bewirkt. Zu diesem Zweck ist eine erste Ventileinrichtung 34 vorgesehen. Ein Umschalten dieser ersten Ventileinrichtung 34 bewirkt im normalen Arbeitsbetrieb eine Rückführung der Beaufschlagungseinrichtung. Dabei ist es denkbar, dass diese Ventileinrichtung als Pilot-Ventil für ein Ventil bzw. einen Ventilraum 35 eines Ventils oder allgemein einen Gasaufnahmeraum 35 einer pneumatischen Antriebseinrichtung der Antriebsanordnung 30 dient.

Neben dieser ersten Ventileinrichtung 34 ist eine zweite Ventileinrichtung 36 vorgesehen, welche parallel zu der ersten Ventileinrichtung 34 geschaltet ist und ebenfalls eine Rückführung der Beaufschlagungseinrichtung bewirkt. Damit ist bei dieser Ausführungsform ein zweites redundantes Pilotventil 36 vorgesehen. Falls nun die erste Ventileinrichtung 34 versagt, kann auch über die zweite Ventileinrichtung 36 eine Entlastung erfolgen und die Rückführung der Beaufschlagungseinrichtung 42 durchgeführt werden. Das Bezugszeichen 38 kennzeichnet ein Reservoir für Druckluft.

Während des Expansionsvorgangs ist es möglich, dass über dieses Reservoir und die durchgeschalteten Ventile 36 und 34 die Beaufschlagungseinrichtung auf den Kunststoffvorformling zugestellt ist. Zur Rückführung kann ein Ventilraum einer als Antriebseinrichtung dienenden Ventileinrichtung entlüftet werden. Bei dieser Ausführungsform ist damit die zweite Ventileinrichtung 36 das Sicherungsmittel, welches auch bei einem Ausfall eines Elementes der ersten Antriebseinrichtung eine Entfernung der Beaufschlagungseinrichtung von dem Kunststoffvorformling bewirkt,bzw. freigibt oder zuläßt. in dem eine Änderung des Schaltzustands der Ventileinrichtung erzwungen und/oder umgangen wird, hier zumindest umgangen wird. Dabei kann auch ein Innendruck in dem Behältnis erfasst werden, und vorgesehen sein, dass erst ab einem bestimmten Innendruck in dem Behältnis ein Schalten der zweiten Ventileinrichtung möglich ist, etwa ab einem Innendruck, den die Antriebseinrichtung zum Antreiben der Reckstange nicht mehr überwinden kann

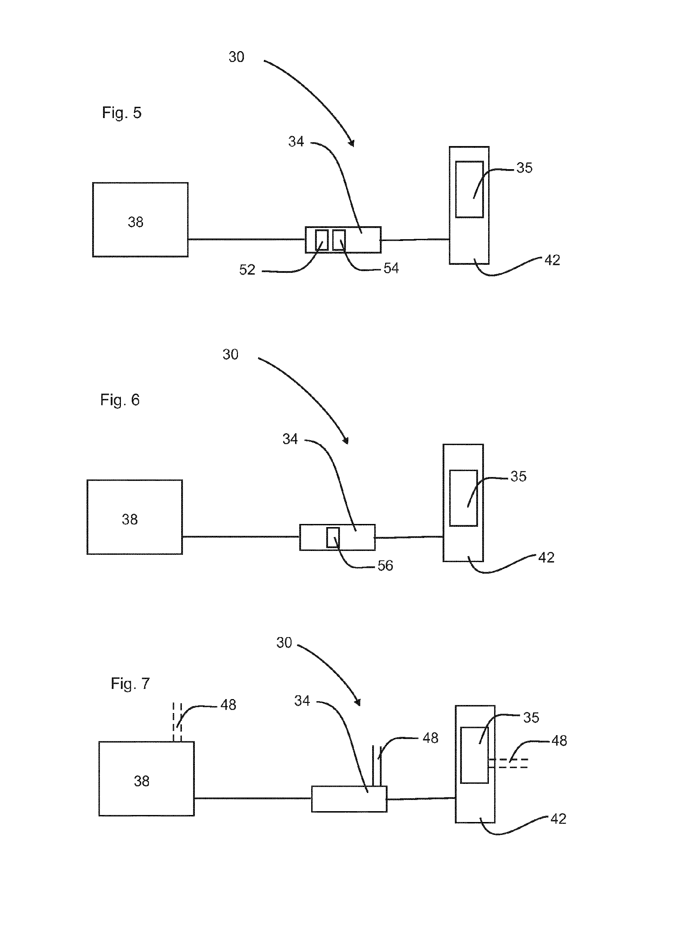

Fig. 5 veranschaulicht eine weitere Ausführungsform einer erfindungsgemäßen Vorrichtung. Bei dieser Ausführungsform ist lediglich die erste Ventileinrichtung 34 vorgesehen, es sind jedoch an dieser ersten Ventileinrichtung zwei redundant vorhandene insbesondere elektrische oder elektropneumatische Vorsteuereinrichtungen 52 und 54 vorgesehen. Falls nun eine dieser Steuerungseinrichtungen 52 versagt, wird die Ventileinrichtung 34 gleichwohl über die zweite Steuerungseinrichtung 54 geschaltet. Auch könnte eine Erfassungseinrichtung vorgesehen sein, welche ein Versagen der ersten Steuerungseinrichtung oder der ersten Ventileinrichtung 34 erfasst. Damit stellt hier die zweite Steuerungseinrichtung das Sicherungsmittel dar. Auch in diesem Fall kann das Sicherungsmittel, hier die zweite Steuerungseinrichtung derart gestaltet sein, dass sie ein Schalten auch in Abhängigkeit von einem Innendruck in den Behältnissen bewirkt.

Bei der in Fig. 6 gezeigten Ausführungsform ist eine Erfassungseinrichtung 56 vorgesehen, welche eine Fehlfunktion der ersten Ventileinrichtung 34 erfasst. Wird eine derartige Fehlfunktion erfasst, kann ein weiterer Vorgang (insbesondere automatisch) eingeleitet werden, wie etwa ein Notstopp der Anlage oder aber ein Rückführen der Blasdüseneinrichtung 42 durch eine Bewegung der Reckstange. Daher wäre es z.B. denkbar, den Innendruck der Flasche oder die Ventilposition zu überwachen. Wenn die Erfassungseinrichtung 56 detektiert, dass die gemessenen Werte von den Soll-Werten abweichen, kann ein weiterer Vorgang eingeleitet werden, um die Soll-Werte zu erreichen. Es wäre auch denkbar, ein Wegschwenken der Transfersternklammern einzuleiten, um eine Kollision mit Bauteilen der Umformungsstation, insbesondere der Beaufschlagungseinrichtung, zu vermeiden. Auch hier könnte wiederum eine Erfassungseinrichtung vorgesehen sein, welche einen Innendruck in dem Behältnis bestimmt um auch diese Druckwerte bei der Beurteilung etwa der Frage der Durchführung eines Not-Stopps zu berücksichtigen.

Fig. 7 zeigt eine weitere Ausführungsform der vorliegenden Erfindung. In diesem Falle ist eine weitere Notentlüftung vorgesehen, welche bewirkt, dass bei einem Versagen des Ventils 34 dieses bzw. der Ventilraum 35 entlüftet wird und so die Beaufschlagungseinrichtung rückgestellt wird. Es wäre jedoch auch möglich, dass bei einer derartigen Notentlüftung diese an einem Reservoir 38 vorgesehen ist und auf diese Weise eine Notentlüftung und damit auch eine Notrückführung der Beaufschlagungseinrichtung 42 stattfindet. In diesem Fall ist es jedoch denkbar, dass sämtliche Beaufschlagungseinrichtungen rückgestellt werden, was zumindest einen gewissen Ausschuss an gerade gefertigten Behältnissen nach sich zieht. Dies ist jedoch noch eher in Kauf zu nehmen, als eine Kollision der Blasdüse mit weiteren Elementen der Vorrichtung. Genauer gesagt kann, wie in Fig. 7 gezeigt, ein Steuerraum der Ventileinrichtung entlastet werden.

Das Bezugszeichen 48 bezieht sich grob schematisch auf ein weiteres Sicherungsmittel, hier in Form einer Be- bzw. Entlüftungseinrichtung. Diese kann dabei sowohl an dem Reservoir angeordnet sein als auch (nicht abschließend) alternativ an einer der anderen in der Figur dargestellten Positionen, also etwa auch an dem Ventil 34 oder der Antriebseinrichtung 35.

Weiterhin ist es auch denkbar, dass die Bewegung der Beaufschlagungseinrichtung 42 an die Bewegung der Recktange 8 gekoppelt ist und in diesem Falle im Notfall eine Rückführung bewirkt wird. In diesem Falle kann die Reckstange 8 im Falle eines Versagens der ersten Ventileinrichtung 34 die Zwangsentlastung bzw. das Rückführen der Beaufschlagungseinrichtung 42 herbeiführen. Daneben wäre es auch möglich, das Auslösen einer Sicherheitsfunktion an die Bewegung der Reckstange zu koppeln. Bei einem Streckblasvorgang wird die Reckstange zu einem bestimmten Zeitpunkt wieder aus dem Behältnis herausgezogen. Dies erfolgt bevorzugt mittels eines elektrischen Antriebs. Falls nun eine Steuerung feststellt, dass etwa die Reckstange zu einem vorgegebenen Zeitpunkt nicht aus dem Behältnis gezogen werden kann, etwa weil noch keine Druckentlastung stattgefunden hat, kann auch in Reaktion auf eine derartige Feststellung eine Rückstellbewegung der Beaufschlagungseinrichtung eingeleitet werden. In diesem Fall kann beispielsweise das Sicherungsmittel in eine Steuerung eines Antriebs zur Durchführung der Reckstangenbewegung integriert sein.

Dabei kann eine mechanische Sicherheitsfunktion vorhanden sein, wie beispielsweise eine Kopplung beim Rückführen, es wäre jedoch auch eine berührungslose Initiierung der Zwangsentlastung denkbar, beispielsweise eine Feststellung, dass die Beaufschlagungseinrichtung 42 noch nicht zurückgefahren ist, obwohl sich die Reckstange bereits in einer bestimmten Position befindet. In diesem Falle kann, beispielsweise über ein weiteres Ventil oder einen zusätzlichen Antrieb, eine Rückführung der Beaufschlagungseinrichtung 42 erreicht werden.

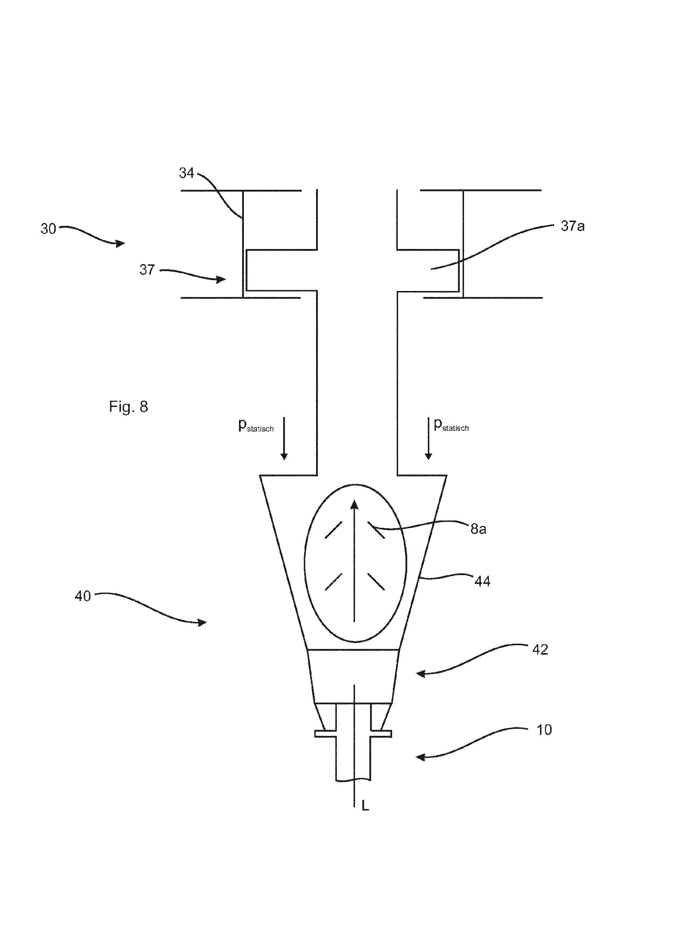

Fig. 8 zeigt eine schematische Darstellung einer an einen Kunststoffvorformling angelegten Beaufschlagungseinrichtung 42. Diese Beaufschlagungseinrichtung ist dabei Bestandteil eines Blaskolbens 44 bzw. an einem Blaskolben angeordnet. Innerhalb dieses Blaskolbens wird die (nicht gezeigte) Reckstange geführt. An dieser Reckstange ist jedoch ein Konus 8a angeordnet, der mit dem Blaskolben 44 zusammenwirken kann, um diesen, insbesondere nach erfolgter Expansion des Behältnisses wieder aus diesem herauszuziehen.

Das Bezugszeichen 30 bezieht sich auf eine Antriebsanordnung, welche hier zum Bewegen der Beaufschlagungseinrichtung 42 in der Richtung L dient. Diese Antriebsanordnung weist dabei eine pneumatische Antriebseinrichtung 37 bzw. eine Kolbeneinrichtung 37a auf, welche durch Beaufschlagen mit einem gasförmigen Medium nach unten d.h. auf den Kunststoffvorformling 10 zu oder nach oben, d.h. von dem Kunststoffvorformling 10 weg bewegt werden kann. Wie in Fig. 8 gezeigt, kann die Antriebsanordnung 30 einen (insbesondere doppelwirkenden) pneumatischen Zylinder aufweisen.

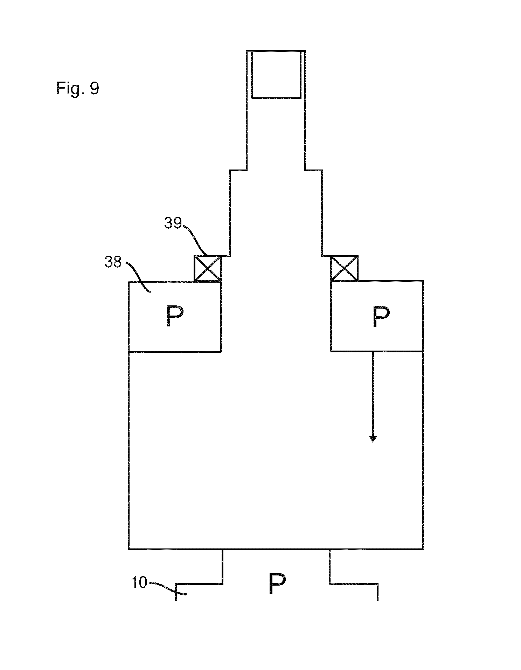

Fig. 9 zeigt eine weitere schematische Darstellung zur Veranschaulichung der Druck- bzw. Kräfteverhältnisse. Dargestellt ist hier ein Reservoir 38, wie etwa ein Ringraum. Ausgehend von diesem Ringraum wird auf den Blaskolben ein Druck bzw. eine Kraft in Richtung des Kunststoffbehältnisses 20 ausgeübt, die über 2kN liegen kann: Mittels einer Dichtungseinrichtung 39 kann eine Abdichtung gegenüber dem Blaskolben 44 erfolgen. In dem Behältnis herrscht ebenfalls, insbesondere gegen Ende des Expansionsvorgangs, ein hoher Druck. Falls der Druck aus dem Behältnis 20 nicht entlassen wird, ist eine Rückstellung der Beaufschlagungseinrichtung durch den Antrieb der Reckstange nicht möglich.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Umformungsstationen
- 2: drehbarer Träger
- 8: Reckstange
- 10: Kunststoffvorformling
- 18: Reckstangenantrieb
- 20: Kunststoffbehältnisse
- 22: Zuführeinrichtung
- 24: Abführeinrichtung
- 30: Antriebsanordnung
- 34: erste Ventileinrichtung
- 35: Antriebseinrichtung bzw. Ventilraum
- 36: zweite Ventileinrichtung
- 37: Antriebseinrichtung
- 37a: Kolbeneinrichtung
- 38: Reservoir
- 39: Dichtungseinrichtung
- 40: Umformungsstationen
- 42: Beaufschlagungseinrichtung / Blasdüse
- 44: Blaskolben
- 46: Ventilblock
- 48: Be-/Entlüftungseinrichtung
- 52, 54: Vorsteuereinrichtungen
- 56: Erfassungseinrichtung
- 112: Blasdüsenkurve
- 114: Blasschlitten

- L: Längsrichtung

## Patentansprüche

1. Vorrichtung (1) zum Umformen von Kunststoffvorformlingen (10) zu Kunststoffbehältnissen (20), mit einem bewegbaren Träger (2), an dem eine Vielzahl von Umformungsstationen (40) angeordnet ist, wobei diese Umformungsstationen (40) jeweils Hohlräume ausbilden, in denen die Kunststoffvorformlinge (10) durch Beaufschlagung mit einem fließfähigen Medium zu den Kunststoffbehältnissen expandierbar sind, und wobei die Umformungsstationen (40) jeweils Beaufschlagungseinrichtungen (42) aufweisen, welche die Kunststoffvorformlinge (10) mit dem fließfähigen Medium beaufschlagen sowie Reckstangen (8), welche in einen Innenraum der Kunststoffvorformlinge (10) einführbar sind, um diese Kunststoffvorformlinge (10) in ihrer Längsrichtung (L) zu dehnen, und wobei die Vorrichtung mindestens eine Antriebsanordnung (30) aufweist, um die Beaufschlagungseinrichtungen (42) relativ gegenüber dem Kunststoffvorformling (10) zu bewegen,
**dadurch gekennzeichnet, dass**
die Antriebsanordnung (30) wenigstens eine erste Ventileinrichtung (34) aufweist, wobei eine Änderung eines Schaltzustands dieser Ventileinrichtung (34) die Entfernungsbewegung der Beaufschlagungseinrichtung (42) freigibt und die Umformungsstation (40) ein Sicherungsmittel (36, 54, 56, 46) aufweist, welches auch bei einem Ausfall eines Elementes der ersten Antriebsanordnung (30) eine Entfernung der Beaufschlagungseinrichtungen (42) von dem Kunststoffvorformling in Abhängigkeit von einem in dem Behältnis zu einem vorbestimmten Zeitpunkt bestehenden Druck bewirkt, indem eine Änderung des Schaltzustands der Ventileinrichtung (34) erzwungen und/oder umgangen wird.

2. Vorrichtung (1) nach Anspruch 1,
**dadurch gekennzeichnet, dass**
die Bewegung, welche die Beaufschlagungseinrichtung (42) von dem Kunststoffvorformling entfernt, ohne Verwendung stationärer Führungselemente erfolgt.

3. Vorrichtung (1) nach wenigstens einem der vorangegangenen Ansprüche,
**dadurch gekennzeichnet, dass**
zusätzlich zu der ersten Ventileinrichtung (34) eine zweite Ventileinrichtung (36) vorgesehen ist, welche ebenfalls geeignet ist, durch eine Änderung eines Schaltzustands dieser zweiten Ventileinrichtung (36) die Entfernungsbewegung der Beaufschlagungseinrichtung (42) freizugeben.

4. Vorrichtung (1) nach wenigstens einem der vorangegangenen Ansprüche,
**dadurch gekennzeichnet, dass**
die erste Ventileinrichtung (34) zwei wenigstens teilweise voneinander unabhängige Steuerungseinrichtungen zum Steuern dieser Ventileinrichtung (34) aufweist.

5. Vorrichtung (1) nach wenigstens einem der vorangegangenen Ansprüche,
**dadurch gekennzeichnet, dass**
eine Erfassungseinrichtung (56) vorgesehen ist, welche eine Fehlfunktion der ersten Ventileinrichtung (34) erfasst.

6. Vorrichtung (1) nach wenigstens einem der vorangegangenen Ansprüche,
**dadurch gekennzeichnet, dass**
die Vorrichtung (1) eine Entlüftungseinrichtung (46) aufweist, welche bei einem Ausfall der ersten Ventileinrichtung (34) eine Entlüftung wenigstens eines zu einer Veränderung des Schaltzustands dieser Ventileinrichtung dienenden Fluidraums bewirkt.

7. Verfahren zum Umformen von Kunststoffvorformlingen (10) zu Kunststoffbehältnissen (20) mit den Schritten:
- Übergabe eines Kunststoffvorformlings (10) an eine Umformungsstation (40)
- Heranführen einer Beaufschlagungseinrichtung (42) an den Kunststoffvorformling (10)
- Beaufschlagen eines Innenraums des Kunststoffvorformlings (10) mit einem fließfä higen Medium zu dessen Expansion
- Wegführen der Beaufschlagungseinrichtung (42) von dem Kunststoffbehältnis (20) nach erfolgter Expansion des Kunststoffvorformlings (10) wobei zum Wegführen der Beaufschlagungseinrichtung (42) von dem Kunststoffvorformling (10) eine Antriebsanordnung (30) verwendet wird und diese Antriebsanordnung (30) wenigstens eine erste Ventileinrichtung (34) aufweist, wobei durch eine Änderung eines Schaltzustands dieser Ventileinrichtung (34) die Entfernungsbewegung der Beaufschlagungseinrichtung (42) freigegeben wird **dadurch gekennzeichnet, dass**
mindestens ein Sicherungsmittel vorgesehen ist, welches bei einem Ausfall der Ventileinrichtung (34) eine Entfernung der Beaufschlagungseinrichtung (42) von dem Kunststoffvorformling (10) freigibt.

8. Verfahren nach Anspruch 7,
**dadurch gekennzeichnet, dass**
das Sicherungsmittel bei einem Ausfall der Ventileinrichtung eine Änderung des Schaltzustands der Ventileinrichtung bewirkt oder umgeht.

9. Verfahren nach Anspruch 7 oder 8,
**dadurch gekennzeichnet, dass**
ein Wegführen der Beaufschlagungseinrichtung (42) durch eine elektrisch wirkende Antriebseinrichtung (35) erfolgt.

10. Verfahren nach wenigstens einem der vorangegangenen Ansprüche 7 - 8,
**dadurch gekennzeichnet, dass**
zum Zweck des Umformvorgangs eine Reckstange in die Kunststoffvorformlinge (10) eingeführt wird, um diese zu dehnen und diese Reckstange zu einem späteren Zeitraum wieder aus dem Behältnis heraus bewegt wird.

11. Verfahren nach Anspruch 9,
**dadurch gekennzeichnet, dass**
die Entfernung der Beaufschlagungseinrichtung (42) wenigstens bei einem Ausfall der Ventileinrichtung durch eine mechanische Kopplung einer Bewegung der Beaufschlagungseinrichtung an eine Bewegung der Reckstange (8) erfolgt.
